# EUROPEAN PATENT SPECIFICATION

(11) **EP 2 028 085 B1**
(45) Date of publication and mention of the grant of the patent: **05.06.2013**
(21) Application number: 08162844.8
(22) Date of filing: 22.08.2008
(51) Int. Cl.: B62D 59/04

(54) **Auxiliary drive for a caravan**
Hilfsantrieb für einen Anhänger
Boîte auxiliaire de vitesse pour une caravane

(30) Priority: 23.08.2007 NL 2000829
(43) Date of publication of application: 25.02.2009
(73) Proprietor: Reich GmbH, 35713 Eschenburg (DE)
(72) Inventor: Bender, Steffen, 35713 Eschenburg (DE); Beijersbergen van Henegouwen, Cornelis Martin, 5314 AP Bruchem (NL)
(74) Representative: van Westenbrugge, Andries

(56) References cited:
- EP-A- 1 714 859
- BR-U- 7 701 737

## Description

The present invention relates to a an auxiliary drive assembly for a caravan or trailer having a drive unit. The drive unit comprises a drive motor, and a reduction gear connected thereto, wherein said drive unit is provided with attachment means for attachment to a displaceable carrier.

A drive unit of this type is generally known in the prior art. It is becoming more and more common to fit an auxiliary drive, in particular to caravans and other trailers which are relatively heavy and have to be moved for some reason or other while not being coupled to the towing vehicle. Such an auxiliary drive is moved in any suitable way from the rest position to the wheel to be driven. Such a movement may comprise a translation, rotation or combination thereof. Subsequently, the wheel is brought into engagement with the auxiliary drive. This engagement can also be effected in many ways. In most cases, a drive roller is used which presses on the tyre of the wheel. However, systems using gear wheels and the like are also known, in which it is not the tyre of the wheel in question that is brought into engagement, but rather another part connected to the wheel, such as a toothed brake drum.

The present invention relates to all the above-described constructions.

Generally, with constructions of this type, opposite wheels are driven by separate motors. As a result, it is readily possible to go around bends and carry out other manoeuvres. The prior art in this case uses left-hand and right-hand auxiliary drives which are embodied so as to mirror one another. This relates to both the drive unit comprising a drive motor and reduction gear and the associated mechanism which is moved to and from the wheel in order to bring the motor/reduction gear and wheel into engagement with one another.

EP 1 714 859 A1 discloses an auxiliary drive having a drive unit which is specifically built for left hand or right hand use.

MU 7 701 737-4U (Brazil) discloses two wheels on a common shaft having a chain drive. Each chain is driven by the same type of engine which is mounted centrally relative to the related wheel. This can be effected by having the drive chain at one wheel between such wheel and the centre axis of the vehicle whilst at the other wheel the chain is outside from such wheel.

It is intended to produce such drive units in an increasingly more inexpensive, lightweight and compact way, which results in significant costs, both in terms of production costs and development costs.

It is an object of the present invention to provide a very effective drive unit which can be produced at relatively low cost.

This object is achieved with an auxiliary drive assembly having the features of claim 1.

According to the present invention, the drive unit which is to be used for an auxiliary drive is embodied such that it can be used on both the left-hand and the right-hand side of the relevant trailer. This means that there are no longer two different motor reduction gear combinations for driving the left-hand and right-hand wheel. Thus, the costs for production, transportation and storage (warehouse space) can be significantly reduced and assembly can also be simplified and errors prevented.

The concept of the invention can be realised in many ways. It is possible to arrange the relevant attachment means on either the motor or on the reduction gear. If an embodiment comprising a drive roller is used, a bearing support or a protective housing for the drive roller will generally be present and it is possible to arrange the attachment means there. The attachment means can be produced in two ways. Firstly, an attachment means, such as for example a bolt, or bolt holes can be provided in different locations with respect to the corresponding attachment means on the carrier of the auxiliary drive which is moved to and fro with respect to the tyre.

Another possibility is to use different attachment means on the drive unit wherein a first attachment means is used exclusively for installation on the left-hand side and a second attachment means being used exclusively for installation on the right-hand side. Of course, combinations of these proposals are possible.

According to a particularly simple embodiment, the attachment means comprise attachment flanges or parts which are embodied to bear against the attachment flanges, the attachment flanges in the latter case being arranged on the carrier. It is also possible to use a flange/flange construction with the drive unit/carrier combination.

The invention also relates to a drive unit for an auxiliary drive for a caravan or trailer comprising a drive motor, and a reduction gear connected thereto, wherein said drive unit is provided with attachment means for attachment to a displaceable carrier, wherein said attachment means are embodied such that said drive unit can be attached to said carrier in two mirrored positions, wherein said attachment means comprise attachment means arranged on opposite sides of said drive motor and/or the reduction gear connected thereto.

The present invention also relates to an assembly comprising the above-described drive unit and a displaceable carrier wherein said carrier is provided with further attachment means for co-operation with the attachment means on said drive unit. These further attachment means may be embodied in the same manner as the above-described attachment means.

The invention also relates to an auxiliary drive wherein the above assembly is used and the carrier is displaceable with respect to a frame. Such a frame may form an integral part of the relevant vehicle or a profile (structure) attached thereto. As already indicated above, the displacement of the carrier with respect to the frame may be carried out in a rotating manner, but is carried out in a linear manner in a preferred embodiment.

The present invention also relates to an auxiliary drive assembly which is suitable for driving a vehicle. This comprises two auxiliary drives and these are provided with identical drive units, as described above. The carriers are not identical, but identical following mirroring.

With such an auxiliary drive assembly, it is possible to use identical drive units which can be used in either identical or mirrored positions.

The invention will be described in more detail with reference to an exemplary embodiment illustrated in the drawing, in which:
Fig. 1 diagrammatically shows a partially cut-away view of a pulled vehicle provided with the auxiliary drives according to the invention;
Fig. 2 diagrammatically shows a first embodiment of an auxiliary drive;
Fig. 3 diagrammatically shows the positioning of some of the parts illustrated in Fig. 2 mirrored with respect to one another; and
Fig. 4 shows a further variant of the auxiliary drive according to the present invention.

In the following drawings, the principle of the present invention will be explained diagrammatically. All this is done diagrammatically as the principle of the present invention can be applied in many different ways and the exemplary embodiments illustrated here should therefore not be regarded as being limiting either.

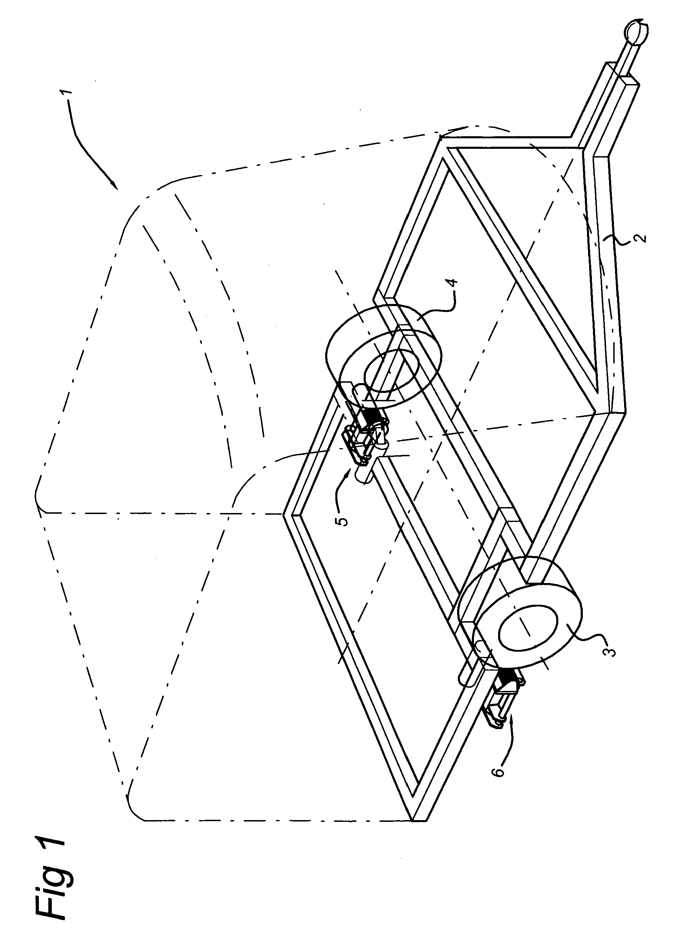

As an example of a trailer, Fig. 1 shows a caravan 1, which has a frame 2, a right-hand wheel 3 and left-hand wheel 4. An auxiliary drive 6 is associated with the right-hand wheel 3 and an auxiliary drive 5 is associated with the left-hand wheel 4. Each auxiliary drive is provided with its own electric motor, and the electric motors can be controlled independently of one another in order to enable a rotating movement.

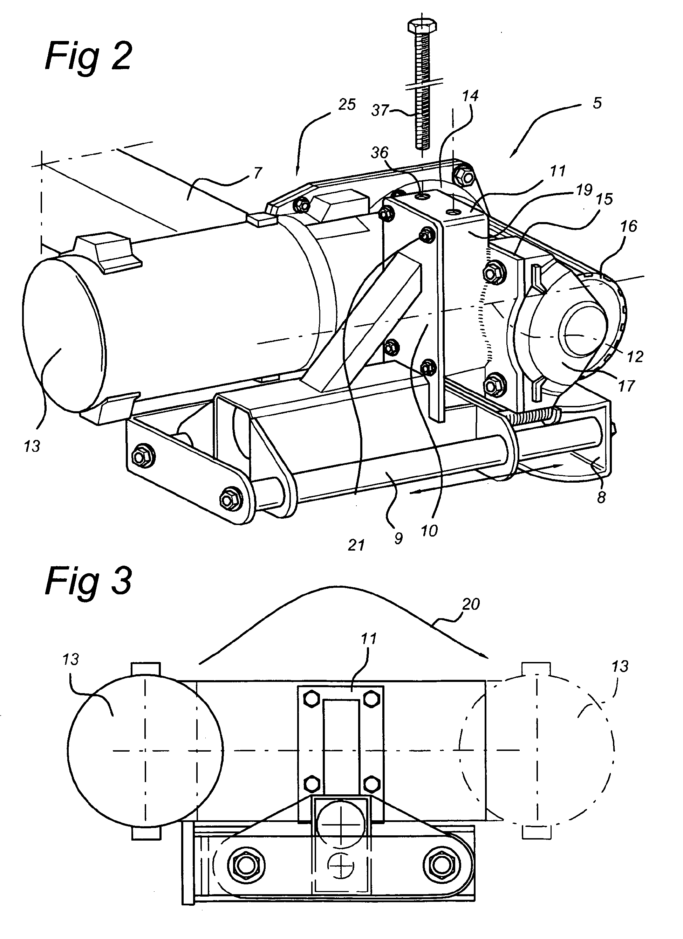

Fig. 2 shows a more detailed highly diagrammatic view of auxiliary drive 5, which illustrates that the beam 7 which is connected to the frame 2 is coupled in turn to a frame 8. Frame 8 is provided with two sliding rods on which a carriage or carrier 9 can move to and fro. As a result of this reciprocating movement, the drive unit 25 arranged on the carrier 9 can be moved away from and towards the wheel 4 in order to be brought into or out of engagement with the tyre. The engagement of the wheel can be effected in another manner as well. In the illustrated exemplary embodiment, the drive unit 25 comprises a motor 13 and a reduction gear 14 connected thereto and a drive roller 16 connected to the reduction gear 14. The free end of the drive roller is supported in a bearing housing 17 which is in turn connected to a roller housing 15 which, in turn, is attached to the transmission 14. This roller housing supports the motor/reduction gear and absorbs the drive forces.

Such a roller housing may be the most important supporting part of the construction, as it absorbs the forces which act between the wall and the drive roller.

The housing 15 is provided with a flange 11 provided with four threaded apertures 19 which are arranged symmetrically with respect to one another. Carrier 9 is provided with a corresponding flange 10 of so that bolts 21 which extend through flange 10 can be secured in the housing 15.

As indicated above, the pattern of the threaded apertures 19 is symmetrical, so that it is possible to rotate the drive unit comprising motor 13, reduction gear 14 and drive roller 16 through 180 degrees with respect to the shaft 12, following which it is also possible to attach it to the flange 10. This is shown diagrammatically in Fig. 3 where arrow 20 is used to indicate that the motor 13 can be arranged on either the left-hand or right-hand side of the flange 11. This means that a single drive unit comprising at least one drive motor and the associated reduction gear can be used both on the left-hand and on the right-hand side. In addition, a housing is present in the present example for the drive roller 16, the two parts also forming part of the drive unit. However, a construction is conceivable in which only the motor and reduction gear can be used as a single part on both sides.

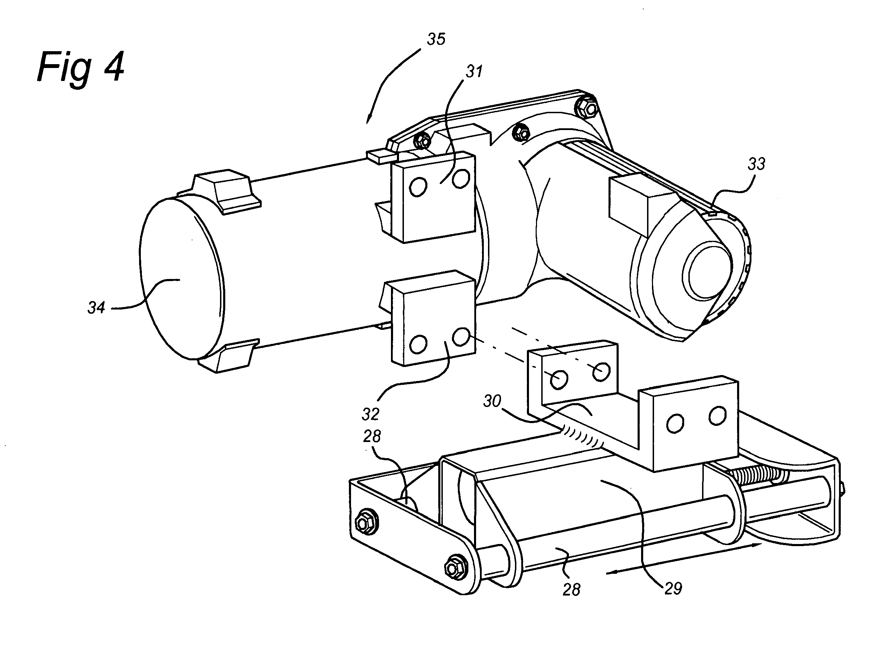

Another example of the attachment means between the carrier and the drive unit is shown in Fig. 4. In the latter, reference numeral 28 denotes the sliding rods for the carrier or carriage 29. On this carrier or carriage 29, there is a further attachment flange 30 which can be brought into engagement with attachment flange 32 or can be brought into engagement with attachment flange 31 which is arranged on the motor 34 of the drive unit 35. In this case as well, the drive unit is provided with a drive roller which is denoted by reference numeral 33.

By means of the invention, it is possible to use only one drive unit for both the left-hand and the right-hand side. This results in a significant cost saving in the chain of design, production, transportation, storage, installation and subsequent maintenance.

Upon reading the above, those skilled in the art will immediately understand that many variants are possible within the context of the inventive idea which are covered by the scope of the attached claims. Rights are expressly sought for such variants.

Thus, it is possible to embody the attachment of the embodiment shown in Fig. 2 differently. Reference numeral 36 denotes apertures and reference numeral 37 bolts. This makes it possible to produce attachment with respect to the carrier in two positions.

## Claims

1. Auxiliary drive assembly for a caravan (1) or trailer comprising two auxiliary drives (5, 6) for opposite wheels (3, 4) of a vehicle (1) comprising two identical drive units, each drive unit comprising a drive motor (13), and a reduction gear connected thereto (14), wherein said drive unit is provided with attachment means for attachment to a displaceable carrier (9), **characterized by** said attachment means (11, 31, 32) being embodied such that said drive unit can be attached to said carrier in two mirrored positions, as well as two carriers (9) and frames (8) connected to said carriers, wherein said identical drive units are attached to two said carriers (9) in mirrored positions with respect to each other.

2. Assembly according to Claim 1, wherein said attachment means comprise attachment means (31, 32) arranged on opposite sides of said drive motor and/or the reduction gear connected thereto.

3. Assembly according to one of the preceding claims, wherein said attachment means comprise attachment means (11) which are arranged symmetrically with respect to said mirrored position.

4. Assembly according to one of the preceding claims, wherein said attachment means comprise an attachment flange.

5. Assembly comprising a drive unit according to one of the preceding claims and a drive roller (16) attached to the reduction gear thereof.

6. Assembly according to Claim 5, wherein said drive roller (16) is accommodated in a roller housing (15) comprising said attachment means.

7. Assembly comprising a drive unit according to one of Claims 1-4 and a displaceable carrier (9).

8. Assembly according to Claim 7, wherein said displaceable carrier is provided with further attachment means (10, 30) which co-operate with said attachment means, wherein said attachment means co-operate in two mirrored positions with said further attachment means in an engaging manner.

9. Assembly according to Claim 7 or 8, wherein said attachment means and further attachment means comprise an attachment flange and further attachment flange, respectively, which flanges can be connected to one another in two mirrored positions.

10. Assembly according to one of Claims 7-9 comprising a frame (8), in which said carrier (9) can be displaced with respect to the frame.

11. Assembly according to Claim 10, wherein said carrier can be displaced linearly with respect to the frame.

12. Assembly according to Claim 1, wherein said carriers are mirror-identical.

13. Assembly according to one of the preceding Claims 1 or 12, in which said frame-carriers are mirror-identical.

14. Drive unit for an auxiliary drive for a caravan (1) or trailer according to claim 1 comprising a drive motor (13), and a reduction gear connected thereto (14), wherein said drive unit is provided with attachment means for attachment to a displaceable carrier (9), **characterized in that** said attachment means (11, 31, 32) are embodied such that said drive unit can be attached to said carrier in two mirrored positions, wherein said attachment means comprise attachment means (31, 32) arranged on opposite sides of said drive motor and/or the reduction gear connected thereto.

## Patentansprüche

1. Hilfsantriebsanordnung für einen Wohnwagen (1) oder Anhänger mit zwei Hilfsantrieben (5, 6) für gegenüberliegende Räder (3, 4) eines Fahrzeugs (1) mit zwei identischen Antriebseinheiten, wobei jede Antriebseinheit einen Antriebsmotor (13) und ein damit verbundenes Untersetzungsgetriebe (14) aufweist, wobei die Antriebseinheit mit Befestigungseinrichtungen zur Befestigung an einem verschiebbaren Träger (9) versehen ist, **dadurch gekennzeichnet, dass** die Befestigungseinrichtungen (11, 31, 32) so ausgebildet sind, dass die Antriebseinheit an dem Träger in zwei gespiegelten Positionen befestigt werden können, sowie zwei Trägern (9) und Rahmen (8) mit den Trägern verbundenen, wobei die identischen Antriebseinheiten an den beiden Trägern (9) in gespiegelten Positionen in Bezug zueinander befestigt sind.

2. Anordnung nach Anspruch 1, wobei die Befestigungseinrichtungen Befestigungseinrichtungen (31, 32) aufweisen, die auf gegenüberliegenden Seiten des Antriebsmotors und/oder des damit verbundenen Untersetzungsgetriebes angeordnet sind.

3. Anordnung nach einem der vorhergehenden Ansprüche, wobei die Befestigungseinrichtungen Befestigungseinrichtungen (11) aufweisen, die in Bezug auf die gespiegelte Position symmetrisch angeordnet sind.

4. Anordnung nach einem der vorhergehenden Ansprüche, wobei die Befestigungseinrichtungen einen Befestigungsflansch aufweisen.

5. Anordnung mit einer Antriebseinheit nach einem der vorhergehenden Ansprüche und einer Antriebsrolle (16), die an deren Untersetzungsgetriebe befestigt ist.

6. Anordnung nach Anspruch 5, wobei die Antriebsrolle (16) in einem Rollengehäuse (15) untergebracht ist, das die Befestigungseinrichtungen aufweist.

7. Anordnung mit einer Antriebseinheit nach einem der Ansprüche 1 bis 4 und einem verschiebbaren Träger (9).

8. Anordnung nach Anspruch 7, wobei der verschiebbare Träger mit weiteren Befestigungseinrichtungen (10, 30) versehen ist, die mit den Befestigungseinrichtungen zusammenwirken, wobei die Befestigungseinrichtungen in zwei gespiegelten Positionen mit den weiteren Befestigungseinrichtungen in gegenseitigen Eingriff zusammenwirken.

9. Anordnung nach Anspruch 7 oder 8, wobei die Befestigungseinrichtungen und die weiteren Befestigungseinrichtungen einen Befestigungsflansch bzw. einen weiteren Befestigungsflansch aufweisen, die in zwei gespiegelten Positionen miteinander verbunden werden können.

10. Anordnung nach einem der Ansprüche 7 bis 9 mit einem Rahmen (8), in dem der Träger (9) in Bezug auf den Rahmen verschoben werden kann.

11. Anordnung nach Anspruch 10, wobei der Träger in Bezug auf den Rahmen linear verschoben werden kann.

12. Anordnung nach Anspruch 1, wobei die Träger spiegelbildlich identisch sind.

13. Anordnung nach einem der vorhergehenden Ansprüche 1 oder 12, bei der die Rahmenträger spiegelbildlich identisch sind.

14. Antriebseinheit für einen Hilfsantrieb für einen Wohnwagen (1) oder Anhänger nach Anspruch 1 mit einem Antriebsmotor (13) und einem damit verbundenen Untersetzungsgetriebe (14), wobei die Antriebseinheit mit Befestigungseinrichtungen zur Befestigung an einem verschiebbaren Träger (9) versehen ist, **dadurch gekennzeichnet, dass** die Befestigungseinrichtungen (11, 31, 32) so ausgebildet sind, dass die Antriebseinheit an dem Träger in zwei gespiegelten Positionen befestigt werden kann, wobei die Befestigungseinrichtungen Befestigungseinrichtungen (31, 32) aufweisen, die auf gegenüberliegenden Seiten des Antriebsmotors und/oder des damit verbundenen Untersetzungsgetriebes angeordnet sind.

## Revendications

1. Mécanisme d'entraînement auxiliaire pour une caravane (1) ou une remorque comprenant deux entraînements auxiliaires (5, 6) pour les roues opposées (3, 4) d'un véhicule (1) comprenant deux unités d'entraînement identiques, chaque unité d'entraînement comprenant un moteur d'entrainement (13), et un réducteur qui y est relié (14), dans lequel ladite unité d'entraînement est munie de moyens de fixation pour la fixation à un support déplaçable (9), **caractérisé en ce que** lesdits moyens de fixation (11, 31, 32) sont incorporés de façon à ce que ladite unité d'entraînement puisse être attachée audit support dans deux positions miroirs, ainsi que deux supports (9) et structures (8) connectées aux dits supports, dans lequel lesdites unités d'entraînement identiques sont attachées à deux dits supports (9) en position miroir l'une par rapport à l'autre.

2. Mécanisme selon la revendication 1, dans lequel lesdits moyens de fixation comprennent des moyens de fixation (31, 32) disposés sur les côtés opposés dudit moteur d'entrainement et/ou le réducteur qui y est relié.

3. Mécanisme selon l'une quelconque des revendications précédentes, dans lequel lesdits moyens de fixation comprennent des moyens de fixation (11) qui sont arrangés symétriquement par rapport à ladite position miroir.

4. Mécanisme selon l'une quelconque des revendications précédentes, dans lequel lesdits moyens de fixation comprennent une bride de fixation.

5. Mécanisme comprenant une unité d'entraînement selon l'une quelconque des précédentes revendications et un rouleau d'entrainement (16) attaché au réducteur.

6. Mécanisme selon la revendication 5, dans lequel ledit rouleau d'entrainement (16) est logé dans un logement de rouleau (15) comprenant lesdits moyens de fixation.

7. Mécanisme comprenant une unité d'entraînement selon l'une des revendications 1-4 et un support déplaçable (9).

8. Mécanisme selon la revendication 7, dans lequel ledit support déplaçable est muni avec des moyens de fixation supplémentaires (10, 30) qui coopèrent avec lesdits moyens de fixation, dans lequel lesdits moyens de fixation coopèrent dans deux positions miroirs avec lesdits moyens de fixation supplémentaires par contact engagé.

9. Mécanisme selon la revendication 7 ou 8, dans lequel lesdits moyens de fixation et les moyens de fixation supplémentaires comprennent une bride de fixation et une bride de fixation supplémentaire, respectivement, dont les brides peuvent être connectées l'une à l'autre dans deux positions miroirs.

10. Mécanisme selon l'une des revendications 7-9 comprenant une structure (8), dans laquelle ledit support (9) peut être déplacé par rapport à la structure.

11. Mécanisme selon la revendication 10, dans lequel ledit support peut être déplacé linéairement par rapport à la structure.

12. Mécanisme selon la revendication 1, dans lequel lesdits supports sont identiques dans un miroir.

13. Mécanisme selon l'une des précédentes revendications 1 ou 12, dans lequel lesdits structures-supports sont identiques dans un miroir.

14. Unité d'entraînement pour un entraînement auxiliaire pour une caravane (1) ou remorque selon la revendication 1 comprenant un moteur d'entrainement (13), et un réducteur qui y est relié (14), dans laquelle ladite unité d'entraînement est munie de moyens de fixation pour la fixation à un support déplaçable (9), **caractérisée en ce que** lesdits moyens de fixation (11, 31, 32) sont incorporés de façon à ce que ladite unité d'entraînement puisse être attachée au dit support dans deux positions miroirs, dans laquelle lesdits moyens de fixation comprennent des moyens de fixation (31, 32) disposés sur les côtés opposés dudit moteur d'entrainement et/ou le réducteur qui y est relié.
